# EUROPEAN PATENT APPLICATION

(11) **EP 4 681 911 A2**
(43) Date of publication of application: **21.01.2026**
(21) Application number: 25208319.1
(22) Date of filing: 04.04.2024
(51) Int. Cl.: B29D 11/00

(54) **METHODS AND DEVICES FOR MANUFACTURING AT LEAST ONE OPTICAL LENS**

(30) Priority: 05.04.2023 EP 23166718
(62) Divisional of application: 24714961.0
(71) Applicant: Carl Zeiss Vision International GmbH, 73430 Aalen (DE)
(72) Inventor: Buergin, Jens, 73430 Aalen (DE); Schlump, Heiko, 73430 Aalen (DE); Cammerer, Carolin, 73430 Aalen (DE); Schoebel, Daniel, 73430 Aalen (DE); Yadwad, Harshavardhan, 73430 Aalen (DE)
(74) Representative: Altmann Stößel Dick Patentanwälte PartG mbB

(57) **Abstract**

The present invention relates to a method (210) and a device (110) for manufacturing at least one optical lens (112, 112', 112", 112"'), a method (230) and a device for controlling at least one manufacturing machine (124, 124', 124") or at least one manufacturing step, and a corresponding computer program.

Herein, the method (230) for controlling at least one manufacturing machine (124, 124', 124") or at least one manufacturing step comprises the following method steps:
a) determining at least one status value related to at least one of the manufacturing machine (124, 124', 124') or the manufacturing step;
b) comparing the at least one status value with at least one recommended value;
c) assigning a difference between the status value and the recommended value into at least two classes according to the difference; and,
d) depending on the class, reporting the status value to at least one of the manufacturing machine (124, 124', 124') or a manufacturing executing system (120).

## Description

### Field of the invention

The present invention relates to a method and a device for manufacturing at least one optical lens, a method and a device for controlling at least one manufacturing machine or at least one manufacturing step, wherein the at least one manufacturing machine is configured for performing the at least one manufacturing step in manufacturing the at least one optical lens, and a corresponding computer program.

### Related art

Known methods and devices for manufacturing optical lenses, generally, operate in the following manner. Typically, a plurality of optical lenses is provided, wherein each optical lens having an identifier is subject to undergo at least one manufacturing step being performed by at least one manufacturing machine configured for performing the at least one manufacturing step. Thereafter, the plurality of the optical lenses is routed to a particular manufacturing machine designated for performing a particular manufacturing step, preferably by using at least one transport element. The particular manufacturing machine selects at least one particular optical lens from the plurality of the optical lenses and performs the particular manufacturing step at the particular optical lens. Herein, in some cases, at least one status value related to the particular manufacturing machine or the particular manufacturing step can be determined and compared with a particular recommended value, wherein, depending on a result of the comparing, the particular manufacturing machine or the particular manufacturing step may be corrected.

US 2012/0007262 A1 discloses a method for manufacturing optical elements, the method including the following processes: a process to determine the wave-front aberration for a lens fabricated using a reference die, and then choose the integer multiple of a predetermined constant that is closest to the difference between a lens design value and the wave-front aberration for the lens fabricated using the reference die; and a process to determine the amount of aberration correction that cancels out the aforementioned integer multiple aberration, change the lens design so that either the low-order spherical aberration or the low-order astigmatism therefor becomes equal to the aberration correction, and fabricate a correction die from either a first or a second die, with the shape of the molding surface thereof changed on the basis of the changed design value. Then the die design value is decided upon, yielding a final die.

US 2018/0365620 A1 discloses a method for providing a model assessing a quantitative expected global quality level of an ophthalmic lens, said lens having given lens and environment parameters, and being produced by a digital lens manufacturing process. A method for real-time in-line quality audit of the freeform production line is provided, by means of a process quality score, built as the result of the normalization of the computed global quality level based on the expected value of manufactured lenses obtained by normal production.

US 2023/0074453 A1 discloses a dyeing data management method that is performed between dyeing systems disposed at different locations. The method includes a first dyeing step of dyeing a lens in a first dyeing system, a first acquisition step of acquiring first result color information of the lens dyed in the first dyeing system, a dyeing data creation step of creating dyeing data based on a discharge amount of dye in the first dyeing step and the first result color information, a data provision step of providing the dyeing data for dyeing a lens to a predetermined color from the first dyeing system to a second dyeing system, a second dyeing step of performing dyeing of a lens according to the provided dyeing data in the second dyeing system, and a second acquisition step of acquiring second result color information of the lens dyed in the second dyeing system.

US 2019/0049936 A1 discloses a method for monitoring an optical lens manufacturing process at a first lens manufacturing side, the method including: a manufacturing data collecting, during which sets of manufacturing data indicative of at least a manufacturing process parameter and/or a manufacturing device parameters and/or an operator parameter and/or an environment parameter at the first lens manufacturing side are collected; a manufacturing information generating, during which at least one manufacturing information indicative of at least a manufacturing process parameter and/or a manufacturing device parameters and/or an operator parameter and/or an environment parameter at a second lens manufacturing side is generated based on the collected manufacturing data.

US 2021/0192779 A1 discloses a manufacturing system. The manufacturing system includes one or more stations, a monitoring platform, and a control module. Each station of the one or more stations is configured to perform at least one step in a multi-step manufacturing process for a component. The monitoring platform is configured to monitor progression of the component throughout the multi-step manufacturing process. The control module is configured to dynamically adjust processing parameters of each step of the multi-step manufacturing process to achieve a desired final quality metric for the component.

WO 2014/173781 A1 discloses a method implemented by computer means for controlling a manufacturing device used in an optical lens manufacturing process, the method comprising:
- an optical lens data providing step, during which optical lens data is provided, the optical lens data represents the nominal and effective values of at least one optical lens parameter of an optical lens manufactured according to a manufacturing process using a manufacturing device; - a manufacturing data providing step during which manufacturing data identifying at least the manufacturing device used to manufacture the optical lens is provided;
- a difference determining step during which the difference between the nominal and effective values of the at least one optical lens parameter of the optical lens is determined;
- a manufacturing device parameter determining step during which a recommended value of a manufacturing parameter of the manufacturing device identified by the manufacturing data is determined, the recommended value of the manufacturing parameter is determined based on the difference between the nominal and effective values of the at least one optical lens parameter.

However, the known methods and devices for manufacturing optical lenses exhibit various disadvantages. In particular, the at least one status value related to a particular manufacturing machine or a particular manufacturing step can, typically, only be processed in a platform-dependent manner, thereby, only allowing a detection of manufacture errors or implementing an improvement only of the particular manufacturing step or of a particular subsequent manufacturing steps at a particular manufacturing machine.

### Problem to be solved

It is therefore an objective of the present invention, in particular with regard to the disclosure US 2018/0365620 A1, to provide a method and a device for manufacturing at least one optical lens, a method and a device for controlling at least one manufacturing machine or at least one manufacturing step, wherein the at least one manufacturing machine is configured for performing the at least one manufacturing step in manufacturing the at least one optical lens, and a corresponding computer program, which at least partially overcome the above-mentioned problems of the state of the art.

It is a particular objective of the present invention to provide a method and a device for manufacturing at least one optical lens which can be performed in an easy and direct manner by processing the at least one status value related to a particular manufacturing machine or a particular manufacturing step in a platform-independent manner, thereby, allowing a detection of manufacture errors or implementing improvements of manufacturing steps in system-wide fashion.

### Summary of the invention

This problem is solved by a method and a device for manufacturing at least one optical lens, a method and a device for controlling at least one manufacturing machine or at least one manufacturing step, wherein the at least one manufacturing machine is configured for performing the at least one manufacturing step in manufacturing at least one optical lens, and a corresponding computer program having the features of the independent claims. Preferred embodiments, which may be implemented in an isolated fashion or in any arbitrary combination, are listed in the dependent claims or throughout the following description.

In a first aspect, the present invention relates to a method for controlling at least one manufacturing machine or at least one manufacturing step, wherein the at least one manufacturing machine is configured for performing the at least one manufacturing step in manufacturing at least one optical lens. The method comprises the following steps a) to d):
a) determining at least one status value related to at least one of the manufacturing machine or the manufacturing step;
b) comparing the at least one status value with at least one recommended value;
c) assigning a difference between the status value and the recommended value into at least two classes according to the difference; and,
d) depending on the class, reporting the status value to at least one of the manufacturing machine or at least one further device.

Herein, the indicated steps may, preferably, be performed in the above-indicated order, commencing with method step a), followed by method steps b) and c), and finishing with method step d). Further, any or all of the indicated steps may be repeated several times and/or preformed concurrently in part, especially for at least one further particular optical lens from a plurality of the optical lenses.

In a particularly preferred embodiment, at least one method step in the methods according to the present invention can be a computer-implemented method. As generally used, the term "computer-implemented method" refers to a method which involves a programmable apparatus, in particular, a computer, a computer network, or a readable medium carrying a program, whereby at least one of the steps of the method, specifically at least one of the method steps a), b), and c), may be performed by using at least one computer program. Alternatively, the at least one computer program may be accessible by an apparatus which may be adapted for performing the method via a network, such as via an in-house network, a cloud server, or via internet. With particular regard to the present invention, at least one of the steps, preferably all steps a) to d), of the present method can, thus, being performed on a programmable apparatus which is configured for this purpose, such as by providing a computer program being configured for such a purpose.

As generally used, the term "optical lens" refers to a lens body which comprises a particular shape that is configured for a purpose of determining and/or altering a vision of a wearer of the optical lens. Based on standard ISO 13666:2019, also herein referred to as "Standard", 3.5.2, the term "spectacle lens" refers to a particular kind of optical lens which is used for determining and/or altering the vision of the wearer of the optical lens, wherein the optical lens is carried in front of the eye of a wearer, thereby avoiding a direct contact with the eye of a wearer. Instead of the term "wearer", a different term, such as "person" or "subject", may also be applicable. In general, the optical lens may be a unifocal lens having a single focal point; may have at least two distinguishable focal points, such a bifocal lens, a multifocal lens, or a variofocal lens; or may be a progressive lens which comprises a transition between differently focusing portions of the optical lens, which, according to the Standard, 3.16, are, typically, distributed over the surface of the spectacle lens in a fashion that a so-denominated "far portion" is designated for providing distance power to be used for altering a so-denoted "far vision", while a so-denominated "near portion" is designated for providing near power to be used for altering a so-denoted "near vision". However, further kinds of optical lenses are conceivable. As used herein, the term "optical lens" comprises the optical lens at any manufacturing stage, in particular any manufacturing stage as described in the Standard, 3.8. By way of example, the optical lens may, thus, comprise a precursor of the optical lens, irrespective of a manufacturing stage of the precursor, particularly a semi-finished lens blank; or a finished optical lens being ready for receiving at least one additional processing step, particularly selected from a finishing step or a refining step, such as a coating step. However, further manufacturing stages of the optical lens are conceivable.

As further generally used, the term "manufacturing" refers to a process of providing on optical lens which is configured for the intended purpose of determining and/or altering the vision of a wearer of the optical lens. Herein, the manufacturing process comprises at least one individual manufacturing step, wherein each "manufacturing step" refers to at least one treatment of the at least one optical lens. In general, geometric values of one or both surfaces of a particular optical lens may be used as input data for the at least one manufacturing step in a process of producing the particular optical lens from a lens blank. For this purpose, at least one manufacturing machine is used. As generally, used the term "manufacturing machine" refers to a tool or a device which is configured for performing the at least one manufacturing step. By way of example, the at least one manufacturing step may be selected from casting, cleaning, curing, beveling, generating, polishing, coating, engraving, taping, detaping, inspecting, or measuring one or both surfaces of the optical lens. Alternatively or in addition, the at least one manufacturing step may be selected from washing, blocking, or deblocking the optical lens. As a further alternative, the at least one manufacturing step may comprise a step of adapting the optical lens to a frame, in particular measuring at least one property of the frame, preferably a geometrical contour for cutting and edging; or fitting the optical lens to the frame. However, providing at least one further manufacturing machine that may be configured for performing at least one further manufacturing step may also be feasible.

In order to enable the at least one manufacturing machine to perform that kind of task for which the at least one manufacturing machine is configured to, the at least one manufacturing machine uses a data set of each particular optical lens. As used herein, the term "data set" refers to at least one item of information which is related to at least one particular optical lens and which comprises information to be used for at least one manufacturing step in manufacturing the at least one particular optical lens.

With particular regard to the present invention, a manufacturing executing system may, especially, be used for performing method steps a) to d) and method step f) as described below in more detail. As generally used, the term "manufacturing executing system" refers to a first device which is configured for controlling and monitoring at least one second device. For this purpose, the manufacturing executing system may be or comprise a programmable apparatus, particularly selected from an application-specific integrated circuit (ASIC), or a digital processing device, in particular at least one of a digital signal processor (DSP), a field programmable gate array (FPGA), a microcontroller, a PLC (Programmable Logic Controller), a microcomputer, a computer, or an electronic communication unit, specifically a smartphone, a tablet, a personal digital assistant, or a laptop. Further components may be feasible, in particular at least one of a data acquisition unit, a preprocessing unit, or a data storage unit. The manufacturing executing system may, preferably, be configured for performing at least one computer program, especially at least one line of a computer program configured for providing data sets for at least one optical lens to at least one manufacturing machine, wherein the processing of the data may be performed in at least one of a consecutive or a parallel fashion.

For a purpose of a data exchange between the manufacturing executing system, the at least one manufacturing machine, the at least one transport element and, optionally, at least one further apparatus, a communication protocol is used. According to prior art communication protocols, each data set is provided as a text message, wherein each compound text string comprises consecutive individual values that have been converted into text and separated by a specific separator, such as a semicolon or an equal sign. A typical common prior art communication protocol that uses text messages of this kind is "Data Communication Standard provided by The Vision Council", also abbreviated to "DCS", about which further information is available at https://thevisioncouncil.org/ members/standards-communication.

In contrast hereto, the present invention uses, as particularly preferred, a communication protocol which is based on OPC Unified Architecture (OPC UA). As generally used, "OPC", which today refers to "Open Platform Communications‴ is an interoperability standard for a secure and reliable data exchange in industrial automation space, ensuring a seamless flow of information among devices from multiple vendors. Further, "OPC Unified Architecture", abbreviated to "OPC UA", refers to a platform providing an independent service-oriented architecture that integrates all functionality of individual OPC specifications into a multilayered approach having extensible framework. For further details, reference can be made to the documents under https://reference.opcfoundation.org/

In accordance with the present invention, each item of information which is transmitted, as particularly preferred by using OPC UA, comprises at least one variable, wherein a plurality of variables is transmitted as serialized individual variables; generating a compound text string is no longer required. For writing a particular item of information, the manufacturing executing system is no longer required to transform the individual values into compound text strings by using a specific separator. Similarly, for reading the particular item of information, the manufacturing machine has no longer to convert the compound text strings into the individual values by using the specific separator. In particular, each individual variable comprises a name and a content, wherein the name and a content are individually readable. As generally used, the term "variable" refers to an item having a name and a content, wherein the name is used to individually address the variable, and wherein the content comprises at least one piece of information that is expressed as a value, wherein the value is of a data type, particularly selected from a bit, an integer value, a float value, an alphanumeric value, or a text string, or of an object comprising at least two of the data types. As used herein, the term "individual" refers to a property of a plurality of variables which are provided as distinguishable items in that each item can be addressed independently from the other items comprised by the plurality of variables. As further used herein, the term "serialized" refers to a further property of a plurality of variables which are transmitted as distinguishable items in a consecutive manner.

By separating the name and the content of each individual variable, the name of each variable can independently be used from the content it refers to. While the name of each variable is fixed during an execution of a related computer program, the value of each variable can be maintained or altered during a course of the execution of the related computer program. By way of example, the value of a variable can be altered following an external demand that may be provided, especially in order to correct an error related to the particular optical lens. As a further example, the value of a variable can be altered following a notification by at least one sensor element, especially in order to ensure a correct application of a substance, such as a coating to the particular optical lens. However, further examples may also be conceivable.

As further generally used, the term "controlling" or any grammatical variation thereof refers to a process comprising the steps of monitoring an object or a procedure, evaluating a behavior of the object or the procedure intermittently or over a time interval, and drawing consequences therefrom, wherein the term "evaluating" or any grammatical variation thereof refers to applying at least one algorithm for deriving at least one item of information about the behavior of the object or the procedure. As a result thereof, the controlling of a particular manufacturing machine and/or a particular manufacturing step allows exerting influence on the particular manufacturing machine and/or the particular manufacturing step, wherein a kind and/or an intensity of the influence is based on an evaluated behavior of the particular manufacturing machine and/or the particular manufacturing step.

According to method step a), at least one status value is determined, wherein the at least one status value is related to at least one of a particular manufacturing machine and/or a particular manufacturing step, wherein the term "status value" denotes a particular value that is influenced by at least one process parameter. As generally used, the term "process parameter" relates to a parameter having influence on at least one of a performance of the manufacturing step, or a performance of the manufacturing machine. In particular, the at least one status value may be selected from at least one of:
- a processing time;
- a processing error;
- a macro parameter, such as an energy, a pressure, or a revolution rate;
- a condition parameter at a time of processing, such as a current, or a temperature;
- a tool being used or a lifetime of the tool at a time of processing;
- a time passed or a number of optical lenses processed since a preceding calibration;
- a size, a position accuracy, or a completeness of at least one mark on the optical lens;
- a measurement parameter; or
- a type, a size or a localization of at least one cosmetic defect of the optical lens.

By way of example, the status value may be related to a force in kN, which can be measured on a particular surface of the particular optical lens. As a further example, the status value may be related to a level in cm of a liquid that can be used for coating purposes in a manufacturing step. However, using at least one different status value may also be feasible. As further used herein, the term "related" refers to a known relationship between a particular status value and a particular manufacturing machine and/or a particular manufacturing step. As a consequence thereof, the at least one status value can be used for controlling the particular manufacturing machine and/or the particular manufacturing step in a sense as defined above.

As further generally used, the term "determining" or any grammatical variation thereof refers to a process of generating at least one representative result, preferably a plurality of representative results. Herein, the at least one representative result may, particularly, be acquired by using at least one of a measuring machine or a sensor element, which may be configured for contributing in determining the at least one status value related to the manufacturing machine and/or the manufacturing step. As generally used, the term "measuring machine" refers to a device which is configured for generating the at least one representative result by performing at least one measurement related to the manufacturing machine and/or the manufacturing step, in particular by executing at least one analyzing step, especially at least one quality control step. By way of example, the measuring machine may be selected from a device configured for determining at least one parameter related to the at least one optical lens, in particular a refractometer, a focimeter, or a deflectometer, in order to determine at least one value related to at least one refractive property or optical property of the at least one optical lens. By way of example, the at least one measured optical parameter related to the at least one optical lens can, subsequently, be used for correcting a fudge factor as, typically, applied in calculating at least one process parameter to be used in manufacturing optical lenses. By way of a further example, the measuring machine may be configured for performing a measurement of at least one property related to a geometrical dimension, particularly with regard to an optical thickness or to a front curve of the optical lens. By way of a still further example, the measuring machine may be configured for detecting at least one of a type, a size or a localization of at least one cosmetic defect of the optical lens, wherein the type may, preferably, be selected from a material defect, a surface defect, a transparency defect, a handling defect, an optical distortion, or a defect of a spectral property. However, using a different type of measuring machine or using a particular type of measuring machine for a different purpose may also be conceivable.

As further generally used, the term "sensor element" refers to an element which is configured for generating a plurality of sensor signals related to at least one process parameter as defined above. Herein, each sensor signal may be or comprise a measured value, which may, preferably, be provided in form of an electrical value, such as a current value or a voltage value, or in form of an optical value. By way of example, the sensor element may be selected from a pressure sensor being configured for determining a force which is measured on a particular surface of the particular optical lens, wherein a value for the force may be considered as the status value. As a further example, the sensor element may be selected from a liquid level sensor being configured for determining a status of a level of a liquid being used for coating purposes in at least one manufacturing step, wherein, a value for the liquid level sensor may be considered as the status value. However, using further sensor elements for determining at least one further status value may also be conceivable.

In a particularly preferred embodiment, the at least one status value may be determined according to method step a) by analyzing the particular manufacturing machine and/or the particular manufacturing step with respect to a process parameter and/or a quality inspection characteristic for at least two optical lenses. As generally used, the term "analyzing" or any grammatical variation thereof refers to a process of extracting the at least one representative result, preferably the plurality of the representative results, by using a process parameter and/or a quality inspection characteristic for at least one object to be manufactured by the particular manufacturing machine and/or the particular manufacturing step. For a purpose of analyzing, a quality control chart and/or a statistical process control (SPC) and/or machine learning may be used; however using a different type of analyzing method may also be conceivable.

In a preferred embodiment, the analyzing may comprise determining at least one correlation between at least two status values at at least two manufacturing steps, preferably at at least two manufacturing stages along a value chain, wherein each manufacturing steps may, particularly, be performed at any manufacturing stage, especially at any manufacturing stage as described in the Standard, 3.8. In particular, the manufacturing stage may be selected from a phase of mold making, a manufacturing of a semi-finished lens blank, a manufacturing of a finished optical lens, or a cut, edge and fit step. By way of example, a correlation between at least one defect that may have been detected in the manufacturing of a finished optical lens may be correlated with a particular process parameter, especially be selected from an oven curing parameter, or a particular kind of material, such as a mold or a monomer mix, as used in manufacturing a semi-finished lens blank. In this manner, an upstream source for a particular problem occurring downstream can be cured in this manner, e.g. by scrapping a mold causing a problem, by scrapping a semi-finished lens blank of the same batch otherwise further processed at the manufacturing of the finished optical lens, or by adjusting at least one process parameter for oven curing. Various further examples are conceivable.

As generally used, the term "machine learning" refers to a process of applying artificial intelligence . A machine learning algorithm configured to generate the desired model based on a large number of training data sets can, preferably, be used. Herein, the machine learning algorithm can be a supervised algorithm or a self-learning algorithm. The machine learning algorithm can use and/or comprise a neural network, which may, preferably, be developed into a trained neural network by using the at least one training data set. The neural network may comprise at least one element selected from hierarchical decision trees, Hough forest, regression forest, Convolutional Neural Network (CNN), Deep Neural Network (DNN) Residual Neural Network, Pixel-wise Voting, Pixel-wise Fusion Network, Deep learning. Alternatively or additionally, the use of at least one other artificial intelligence method, preferably a kernel method, especially a Support Vector Machine (SVM), may also be feasible.

According to method step b), the at least one status value is compared with at least one recommended value. As generally used, the term "recommended value" denotes a preferred or tolerable value or interval for the at least one process parameter as defined above. Following the above example, the recommended value may be related to a particular force or to a particular range of forces, which are considered as preferred or tolerable when applied to a particular surface of the particular optical lens. Following the further example above, the recommended value may be related to a particular level or to a particular range of levels of a liquid, which is considered as preferred or tolerable when used for coating purposes in a manufacturing step. However, various further examples for the status value are conceivable.

As further generally used, the term "comparing" or any grammatical variation thereof refers to a process of evaluating a relationship between at least two items. According to the following invention, it may be evaluated whether a particular status value equals or not a particular recommended value and/or is comprised or not by an interval corresponding to a particular recommended interval. Alternatively or in addition, a difference between the particular status value and the particular recommended value can be derived, wherein the term "difference" refers to a value of separation between the particular status value and the particular recommended value. As a result of method step b), a difference between the particular status value and the particular recommended value is provided.

According to method step c), a difference between the status value and the recommended value is, according to the difference, assigned into at least two classes. As generally used, the term "assigning" or any grammatical variation thereof related to a process of allocating a particular value to a further particular value selected being from at least two specific values or intervals, wherein each of the at least two specific values or intervals are denoted as "class", wherein each class comprises a so-denoted "designation" which refers to a particular content and/or scope as comprised by the particular class. By way of example, the difference between the status value and the recommended value can be assigned to one of three classes denoted by the designations "good", "warning", and "error", wherein, for each class, a particular value or interval is provided for the difference. However, various further examples for classes and corresponding designations are feasible.

In accordance with the present invention, the particular value for the difference between the status value and the recommended value is assigned to a particular class. As a result, thereof, the further processing of the status value or the difference of the status value to the recommended value can be facilitated by being able to only refer to a particular class without requiring more specific information about the content of the class. Still following the above example, the designation "good" may refer to a particular range of forces that is considered as preferred when applied to a surface of an optical lens, while the designation "warning" may refer to a further particular range of forces that is exceeding a warning limit and thus not preferred when applied to the surface of the optical lens, while the designation "error" may refer to a still further particular range of forces that is exceeding a control limit and thus not preferred when applied to the surface of the optical lens. However, further examples for establishing a class and a corresponding designation are conceivable.

According to method step d), the status value is reported to a manufacturing machine and/or at least one further device. Hereby, it is particularly preferred when the reporting of the status value is depending on the class which has been assigned to the difference between the status value and the recommended value. As generally used, the term "reporting" or any grammatical variation thereof refers to a process of forwarding at least one piece of information from a first object to at least one further object. In accordance with the present invention, the designation of the class may be reported to a manufacturing machine and/or at least one further device. As used herein, the at least one further device may, in particular, refer to an element comprised by the manufacturing executing system or controlled by the manufacturing executing system or by a manufacturing machine. As further generally used, the term "depending" or any grammatical variation thereof indicates whether a process is executed at all and/or which form is selected for executing the process based on a particular value of a variable. In accordance with the present invention, the reporting of the status value is, as particularly preferred , only executed if a particular class has been selected for the difference between the status value and the recommended value, wherein a form of the reporting may, as further particularly preferred, depend on the selected class. Further following the above example, a reporting may only be executed upon occurrence of the designations "warning" or "error", wherein the form of the reporting may differ between the two designations. In this manner, a machine alert can be exerted if triggered by the corresponding class, especially to inform a user, who supervises the manufacturing of the optical lenses, about a drift of at least one process parameter and/or to intend at least one reaction of the user, particularly selected from at least one of calibration, tool change, maintenance or problem solving according to Six Sigma methodology, specifically by forwarding the status value to at least one of a quality control app or a maintenance management system.

In a particularly preferred embodiment, at least one characteristic signal may be generated and, subsequently, displayed at the manufacturing machine and/or the manufacturing executing system. As generally used, the term "displaying" or any grammatical variation thereof refers to a process of providing at least one piece of information in a visual fashion to a user, especially by using at least one of a messenger or a monitor to a person, who supervises the manufacturing of the optical lenses. As used herein, the term "characteristic signal" relates to a tool for data visualization of at least one piece of information being generated by a further piece of information, especially in order to facilitate a graphical representation of the at least one further piece of information. Following the above example, the difference between the status value and the recommended value can be assigned to one of three classes by using the designations "good", "warning", and "error", wherein each designation can be graphically represented by a distinguishable color, specifically the designation "error" by the color red, the designation "warning" by the color yellow or orange, and the designation "good" by the color green or cyan. Alternatively, no graphical representation can be used for the designation "good". However, using a further kind of designation and/or a different color may also be feasible.

As indicated above, the characteristic signal can be provided as a machine alert, in particular as an Andon alarm. As generally used, the term "Andon alarm" refers to a particular kind of stack light, especially configured to indicate the colors red, yellow or orange, and green or cyan. Alternatively or in addition, the characteristic signal can be provided on a monitor, especially in form of a dashboard, in particular as an Andon dashboard. As generally used, the term "dashboard" refers to a particular type of graphical user interface configured to indicate the characteristic signal to a user, especially by displaying the status value on a monitor to a user who can view it at a glance. Further, the term "Andon dashboard" refers to a particular kind of dashboard that is configured to display a graphical representation of the Andon alarm on a monitor. For this purpose, using OPC UA is advantageous, particularly since it increases transparency of variables with regard to being visible at a glance. The monitor can be comprised by a computer and/or a mobile communication device. As used herein, the term "computer" implies that this device is placed at a fixed location during use, while the term "mobile communication device" refers to a device that is carried by a user, particularly selected from at least one of a smartphone, a tablet, a laptop, or a personal digital assistant, and, thus, moves together with the user.

Alternatively or in addition, the characteristic signal can be provided in an acoustic fashion, in particular by employing at least one loudspeaker. Herein, the at least one loudspeaker may be located close to the manufacturing executing system and/or to the manufacturing machine and/or to a location where the user, who supervises the manufacturing of the optical lenses, may, typically, reside. The at least one loudspeaker may be comprised by a computer and/or a mobile communication device as defined above. In this manner, the information may still reach the user, even in an event in which the user may not observe the monitor. Alternatively or in addition, the loudspeaker may be comprised a mobile communication device, which could be carried by the user. Still, other examples are feasible.

In a preferred embodiment, the at least one status value can be reported to the particular manufacturing machine, especially in order to modify at least one process parameter for at least one subsequent data set, which may be related to at least one upcoming order concerning at least one further optical lens, wherein the at least one subsequent data set may comprise information to be used for at least one further manufacturing step in manufacturing the at least one further optical lens. In this manner, an upcoming order can be modified by using at least one previously measured process parameter and/or at least one measured quality inspection characteristic of at least one past order, if triggered by the corresponding class into which the difference between the status value and the recommended value has been assigned to according to method step c), especially for improving a quality of manufacturing of the at least one further optical lens to be processed according to at least one upcoming order.

In a further preferred embodiment, the at least one status value can, alternatively or in addition, be reported to at least one further manufacturing machine. For this purpose, the at least one further manufacturing machine can be informed about the status of the particular manufacturing machine, for which the status values has been determined according to method step a), if triggered by the corresponding class into which the difference between the status value and the recommended value has been assigned to according to method step c). In particular, the at least one further manufacturing machine can, especially, be located downstream in a manufacturing process. As generally used, the terms "upstream" and "downstream" refer to particular manufacturing stages in a manufacturing process having more than one manufacturing step, wherein a particular manufacturing step which is executed at a manufacturing particular stage denoted as "upstream" is performed earlier compared to a further manufacturing step which is executed at a further manufacturing stage denoted as "downstream". In a preferred embodiment, the at least one status value can, especially, be used as input for determining the at least one recommended value of at least one particular manufacturing step, specifically at at least one upstream manufacturing stage for at least one subsequent optical lens to be processed, or at at least one downstream manufacturing stage for the further processing of the same optical lens or at least one subsequent optical lens. In this manner, the at least one data set related to the present order concerning the particular optical lens can be modified by using the at least one measured process parameter and/or the at least one measured quality inspection characteristic for executing the present order, especially for improving a quality of manufacturing of the particular optical lens.

In a particular embodiment, an optical lens having a high deviation of the status value to the recommended value can, still, be processed during at least one downstream manufacturing step by adapting at least one recommended value at at least one manufacturing machine being located at at least one downstream manufacturing stage. This advantage is in particular contrast to prior art processing, in which an optical lens having a high deviation of the status value to the recommended value is treated as reject and, therefore, excluded from further processing. By way of example, a particular optical lens having a defect outside a final shape can be further processed after manufacturing the semi-finished lens blank, in particular in the manufacturing of the finished optical lens, or a cut, edge and fit step. Especially, such a defect can be located on the particular optical lens and be considered at at least one downstream manufacturing stage, e.g. blocking the particular optical lens prior to the generating step under consideration of the localization of the defect. By way of a further example, at least one property, such as a geometrical dimension, of a semi-finished lens blank can be used for determining at least one parameter for subsequent generating and polishing in manufacturing the finished optical lens, wherein a corresponding measurement of at least one geometrical dimension can be performed during the manufacturing of the semi-finished lens blank before routing the optical lens to a further location configured for manufacturing the finished optical lens. For this purpose, the at least one status value can be used as at least one recommended value. This kind of processing can, advantageously, be applied for obtaining a better yield in surfacing by taking into account the at least one geometrical property of the semi-finished lens blank. However, various further examples are conceivable.

However, a combination of the mentioned embodiments or further embodiments for reporting the status value, depending on the class, to at least one manufacturing machine and/or manufacturing executing system may also be conceivable.

In a further preferred embodiment, the data set for the at least one particular optical lens can be made available the at least one manufacturing machine. Accordingly, the data set for each optical lens can be transmitted to at least one data providing element, wherein the at least one manufacturing machine has access to the at least one data that is stored in the at least one data providing element and provided thereby to at least one manufacturing machine. As generally used, the term "transmitting" or any grammatical variation thereof refers to a process of transferring at least one item from a first location to a second location. In this preferred embodiment, the manufacturing executing system may transmit the data set to at least one data providing element. As used herein, the term "data providing element" refers to a programmable device as described above in more detail, wherein, however, each data providing element may, preferably, be assigned to a particular manufacturing machine and/or may be comprised by a particular manufacturing machine, wherein the particular manufacturing machine has access to the data set that as stored and provided by the particular data providing element. As an alternative, at least two individual manufacturing machines may share a common data providing element. As a further alternative, a particular manufacturing machine may have at least two individual data providing elements, especially being assigned to at least two individual portions of the particular manufacturing machine.

In this fashion, a definite assignment can be provided between each particular data providing element and each particular manufacturing machine, which facilitates the exchange of data between them. This definite assignment may be particular advantageous since it allows, firstly, the manufacturing executing system to transmit the data sets to the particular manufacturing machine in advance, further, the particular data providing element to store a definite number of tasks that are expected to be performed in near future, and, still further, the particular manufacturing machine to retrieve the required data set just in time without queuing for placing a direct request at the manufacturing executing system. As a result thereof, the manufacturing process can, considerably, be accelerated by using a definite procedure for processing the manufacturing steps that are applied within a definite arrangement of the device for manufacturing the at least one optical lens, wherein the definite arrangement, advantageously, exhibits short and concise links.

In a particularly preferred embodiment, the data providing element may comprise a cache which is configured for storing a predefined number of data sets. As generally used, the term "cache" refers to a buffer being comprised by the data providing element and/or accessible by the data providing element, which is configured for storing a predefined number of items, wherein the stored items can, subsequently, be retrieved from the cache upon demand by using a particular request. Specifically, the cache may, subsequently, be filled with consecutive data sets. In an event in which the cache may already comprise the predefined number of data sets, a first data set which has been, firstly, stored in the cache may be overwritten by a further data set. In this manner, the cache can be maintained small and may be largely devoid of redundant items.

In a further aspect, the present invention relates to a method for manufacturing at least one optical lens. The method comprises the following steps:
e) providing at least one optical lens, wherein each optical lens is subject to undergo at least one manufacturing step being performed by at least one manufacturing machine configured for performing the at least one manufacturing step;
f) routing the at least one optical lens to the at least one manufacturing machine designated for performing the at least one manufacturing step;
g) selecting at least one particular optical lens;
h) performing the at least one manufacturing step at the at least one particular optical lens by using the at least one manufacturing machine;
a) determining at least one status value related to at least one of the manufacturing machine or the manufacturing step;
b) comparing the at least one status value with at least one recommended value;
c) assigning a difference between the status value and the recommended value into at least two classes according to the difference; and,
d) depending on the class, reporting the status value to at least one of the manufacturing machine or at least one further device.

Herein, the indicated steps may, preferably, be performed in the above-indicated order, commencing with method step e), followed by method steps f), g), h), a), b) and c), and finishing with method step d). Further, any or all of the indicated steps may be repeated several times and/or preformed concurrently in part, especially for at least one further particular optical lens from a plurality of the optical lenses.

For method steps a), b), c) and d), reference can be made to the description above or below.

According to method step e), at least one optical lens, preferably a plurality of optical lenses, is provided, wherein each optical lens is subject to undergo at least one manufacturing step being performed by at least one manufacturing machine configured for performing the at least one manufacturing step. Preferably, the plurality of the optical lenses may be provided as a batch for batchwise processing, in particular by providing them on a carrier, such as a tray, that may be configured to carry the plurality of the optical lenses. As generally used, the term "batchwise" refers to a kind of processing in which a plurality of objects denoted by the term "batch" is jointly processed, followed by a break until a further plurality of objects denoted as a "further batch" is jointly processed subsequently. For being able to distinguish between different optical lenses, each optical lens may, preferably, have an identifier. As generally used, the term "identifier" for at least one particular object refers to a particular item of information by which the at least one particular object is distinguishable from at least one further object, especially from the same kind of objects. Herein, the identifier may be used permanently or over a period of time. Accordingly, the identifier is used herein for enabling a distinction of at least one particular optical lens from at least one further optical lens that may be comprised by the same plurality of the optical lenses, typically, denoted by the term "batch" as defined above. In a particular embodiment, the identifier may refer to a particular batch of optical lenses. By way of example, the identifier may, especially, be selected from a permanent mark or a non-permanent mark, which has previously been placed on a portion of the particular optical lens. For this purpose, the identifier may, preferably, be or comprise a barcode, wherein the term "barcode" refers to a machine-readable representation of data, in particular by using a standard barcode, especially selected from a linear code, a Data Matrix barcode, or a QR code. As a further preferred example, the identifier may, however, be placed on a carrier , such as a tray, which is configured to carry at least one optical lens, in particular a batch of optical lenses, wherein a position of each optical lens and an orientation of each surface of each optical lens within the carrier may, further, be known. In this example, the identifier may be or comprise an RFID chip or tag being applied or attached to the respective carrier, wherein the identifier may, especially, correspond to an order number related to the optical lens. As generally used, the term "RFID" refers to a so-denoted "radio-frequency identification", which uses an electromagnetic field to automatically identify and track at least one tag being applied or attached to at least one object. However, using a further kind of identifier may also be conceivable.

According to method step f), the at least one optical lens, preferably the plurality of the optical lenses, is routed to the at least one manufacturing machine which is designated for performing the at least one manufacturing step. As generally used, the term "routing" or any grammatical variation thereof refers to a process of selecting a path for at least one object from an initial location to at least one further location, in particular a plurality of locations. For this purpose, a manufacturing executing system as described elsewhere herein in more detail may be used. In this manner, the routing of the at least one optical lens to the at least one manufacturing machine may be performed in an automatic fashion, especially by using, driving, controlling and monitoring at least one transport element, in particular at least one carrier that may be configured for receiving and transporting the at least one optical lens. For further examples as well as for a definition of the term "transport element", reference can be made to the description below. As an alternative, the routing of the at least one optical lens to the at least one manufacturing machine may be performed in a manual fashion, whereby the manufacturing executing system may, preferably, provide at least one command to a person, especially in a visual, an acoustic, or a tactile manner. By way of example, the manufacturing executing system may generate an accompanying document, preferably for accompanying the carrier carrying the at least one optical lens, wherein the accompanying document may comprise a human-readable text to be executed by a person responsible for routing the carrier. Alternatively or in addition, a loudspeaker can be used for such a task. Further alternatives may also be conceivable.

According to method step g), at least one particular optical lens is selected, in particular by selecting the at least one particular optical lens from a plurality of optical lenses. As generally used, the term "selecting" or any grammatical variation thereof refers to a process of taking a particular item from a list of items, wherein the list of items may have a single entry or, preferably, a plurality of entries. Accordingly, the method step g) may, preferably, address a process in which at least one particular optical lens is taken from plurality of the optical lenses, for which purpose a reference to an identifier with respect to the at least one particular optical lens may be used. As a result thereof, the at least one particular optical lens is now ready for being processed according to method step g).

According to method step h), the at least one manufacturing step is performed at the at least one particular optical lens by using the at least one manufacturing machine, depending on a particular order for manufacturing a particular optical lens. As used herein, the term "performing" or any grammatical variation thereof refers to a process of applying at least one manufacturing step to the at least one optical lens. For examples concerning the at least one manufacturing step reference may be made to the description above. However, applying at least one further manufacturing step to the at least one optical lens may also be feasible.

For further information concerning the method for manufacturing the at least one optical lens, reference can be made to the description of the method for controlling at least one manufacturing machine or at least one manufacturing step as disclosed above or below in more detail.

In a further aspect, the present invention relates to a device for controlling at least one manufacturing machine or at least one manufacturing step, wherein the at least one manufacturing machine configured for performing the at least one manufacturing step in manufacturing at least one optical lens. According to the present invention, the device comprises a manufacturing executing system, wherein the manufacturing executing system is configured for
a) determining at least one status value related to at least one of the manufacturing machine or the manufacturing step;
b) comparing the at least one status value with at least one recommended value;
c) assigning a difference between the status value and the recommended value into at least two classes according to the difference; and,
d) depending on the class, reporting the status value to at least one of the manufacturing machine or at least one further device.

For a definition of the term "manufacturing executing system" as well as for examples thereof, reference can be made to the description above.

In a further aspect, the present invention relates to a device for manufacturing at least one optical lens. According to the present invention, the device for manufacturing the at least one optical lens comprises:
- at least one transport element, wherein the at least one transport element is configured for:
   e) providing at least one optical lens, wherein each optical lens is subject to undergo at least one manufacturing step being performed by at least one manufacturing machine configured for performing the at least one manufacturing step; and
- a manufacturing executing system, wherein the manufacturing executing system is configured for performing the following method steps:
   f) routing the at least one optical lens to the at least one manufacturing machine designated for performing the at least one manufacturing step;
   a) determining at least one status value related to at least one of the manufacturing machine or the manufacturing step;
   b) comparing the at least one status value with at least one recommended value,
   c) assigning a difference between the status value and the recommended value into at least two classes according to the difference; and,
   d) depending on the class, reporting the status value to at least one of the manufacturing machine or at least one further device;
   and
- at least one manufacturing machine designated for performing the at least one manufacturing step in manufacturing the at least one optical lens, wherein the at least one manufacturing machine is configured for:
   g) selecting at least one particular optical lens;
   h) performing the at least one manufacturing step at the at least one particular optical lens by using the at least one manufacturing machine.

As generally used, the term "transport element" refers to an extended object, which is configured for receiving and transporting at least one further object. In accordance with the present invention, a carrier, such as a tray, may be used for receiving and transporting the at least one optical lens to the at least one manufacturing machine. In this manner, the at least one transport element may perform the routing of the at least one optical lens in an automatic fashion, especially by using, driving, controlling and monitoring at least one transport element, in particular at least one carrier that may be configured for receiving and transporting the at least one optical lens. Alternatively or in addition, the transport element may comprise a handling system, in particular selected from a robot or a part thereof. As a further alternative or still in addition, the transport element may comprise at least one of an autonomous mobile robot, an automated guided vehicle, or a drone. As a still further alternative, the routing of the at least one optical lens to the at least one manufacturing machine may be performed in a manual fashion as described above in more detail. However, using a different type of transport element may also be feasible.

In a particular embodiment, the device for manufacturing the at least one optical lens can be embodied as a single device, which comprises the device for controlling the at least one manufacturing machine or the at least one manufacturing step. As an alternative, at least two elements of the indicated devices may be placed at different locations, wherein each element may comprise at least one communication interface configured to cooperate with at least one of the other element. Herein, the different locations may be in the same room, building, town, or country, or distributed over at least two continents. By way of example, the at least one manufacturing machine and the at least one transport element may be located at the same factory building while the manufacturing executing system may be located at a computer center in the same town or in a different town. Further examples are conceivable.

In a further aspect, the present invention refers to a computer program, which comprises executable instructions for performing at least one of the methods, preferably both methods, according to the present invention. For this purpose, the computer program may comprise instructions provided by using a computer program code being capable of performing any or all of the steps of the methods according to the present invention and, thus, for controlling at least one manufacturing machine or at least one manufacturing step in manufacturing the at least one optical lens, or to manufacturing the at least one optical lens, when implemented on a computer or a data processing device. The computer program can, preferably, be provided on non-transient computer-readable storage medium, particularly on a compact disc, an optical storage medium, directly on a computer or data processing device, or via a network, such as via an in-house network, a cloud server, or via internet.

For further details concerning the devices and the computer program, reference can be made to the description of the methods as disclosed elsewhere herein.

The methods and devices according to the present invention exhibit various advantages compared to methods and devices as known from the prior art. In particular, a manufacturing step can be executed only if at least one process parameter having influence a performance of the manufacturing step and/or a corresponding manufacturing machine is within a preferred or tolerable range when used for the particular manufacturing step. Otherwise, a user, who supervises the manufacturing of the optical lenses, can be informed about a drift of a particular process parameter and may execute at least one reaction user, particularly selected from calibration, tool change, maintenance or problem solving according to Six Sigma methodology, specifically by using a quality control app and/or a maintenance management system. In addition, the at least one data set being related to the present order concerning the particular optical lens can be modified, wherein a measured process parameter and/or a measured quality inspection characteristic for executing the present order, can advantageously be used. Further, an upcoming order can be modified by using a previously measured process parameter and/or a measured quality inspection characteristic of one or more past orders. As result of these measures, the quality in terms of yield of the manufacturing optical lenses can considerably be improved and customer order lead times can be reduced due to avoidance of scrapping and restarting lenses for serving individual customer orders.

In prior art standard communication protocols, such as DCS over TCP/IP, the values of labels comprise several fields and are not directly assigned to a label, wherein these fields are separated by special separators, such that each endpoint in a communication, especially the manufacturing executing system or a manufacturing machine, has to generate compound text strings therefrom or to convert text therefrom into individual values using the separators. Advantageously, this conversion is not necessary with OPC UA, thus saving expensive computing power and computing time. More importantly, using OPC UA considerably minimizes a risk for errors, such as an erroneous swapping of values. Further, using OPC UA increases transparency, in particular since all variables generated by a machine can be viewed at a glance. In addition, OPC UA provides embedded security mechanisms, such as data encryption and authentication. Still further, reading and writing the data sets as well as performing dialogs between machines can be implemented on a large number of platforms. By way of example, while it is very complex to implement DCS over TCP/IP on a simple PLC (Programmable Logic Controller), using OPC UA considerably facilitates this task.

As used herein, the terms "have", "comprise" or "include" or any arbitrary grammatical variation thereof are used in a non-exclusive way. Thus, these terms may refer to both a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

As further used herein, the terms "preferably", "more preferably", "particularly", "more particularly", or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in this way with other features of the invention.

### Short description of the Figures

Further optional features and embodiments of the present invention are disclosed in more detail in the subsequent description of preferred embodiments, preferably in conjunction with the dependent claims. Therein, the respective optional features may be realized in an isolated fashion as well as in any arbitrary feasible combination, as the skilled person will realize. It is emphasized here that the scope of the invention is not restricted by the preferred embodiments. In the Figures:
- Figure 1: schematically illustrates an exemplary embodiment of a device for manufacturing at least one optical lens according to the present invention; and
- Figure 2: schematically illustrates an exemplary embodiment of a method for manufacturing at least one optical lens according to the present invention.

### Detailed description of the embodiments

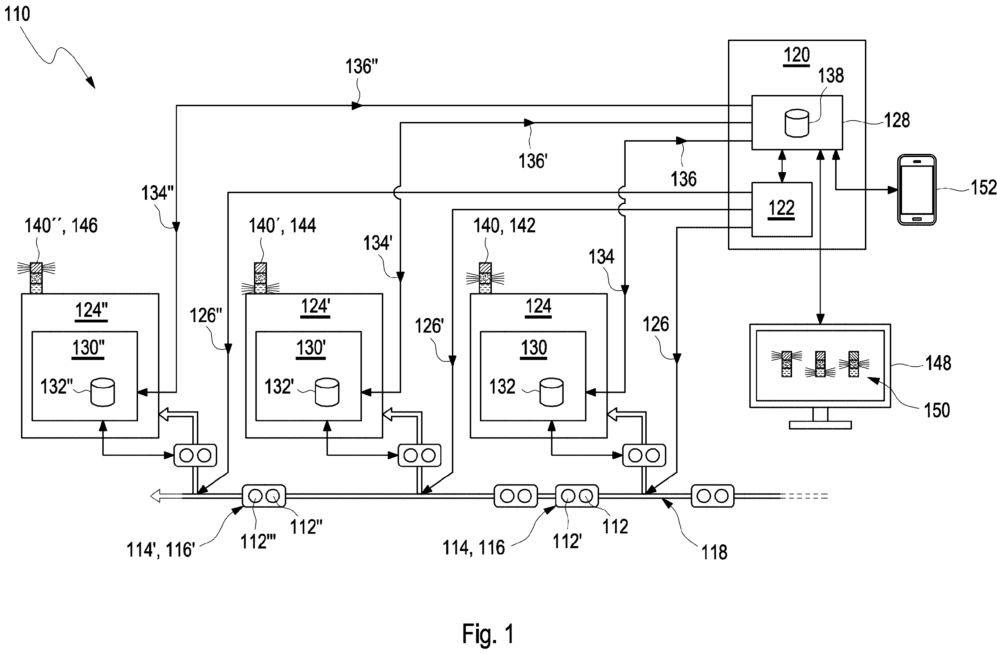

Figure 1 schematically illustrates an exemplary embodiment of a device 110 for manufacturing one or more optical lenses 112, 112', 112", 112‴ according to the present invention, wherein each optical lens 112, 112', 112", 112‴, preferably, has an identifier (not depicted here), by which each optical lens 112, 112', 112", 112‴ is distinguishable from any further optical lens 112, 112', 112", 112‴ being comprised by a plurality of the optical lenses 112, 112', 112", 112"'. By way of example, the identifier may, especially, be selected from a permanent mark or, preferably, a non-permanent mark that can be removed after the manufacturing process has been completed. In particular, the identifier may have previously been placed on a portion of each optical lens 112, 112', 112", 112‴, preferably at a margin of each optical lens 112, 112', 112", 112‴, especially in order not to disturb the manufacturing process.

As further depicted in Figure 1, the exemplary embodiment of the device 110 comprises a plurality of transport elements 114, 114' in form of carriers, each of which assumes here a form of a tray 116, 116', which is configured for providing and transporting the optical lenses 112, 112', 112", 112"'. In the exemplary embodiment as shown in Figure 1, the providing and transporting of the optical lenses 112, 112', 112", 112‴ is performed in an automatic manner by using, driving, controlling and monitoring the trays 116, 116', each of which carries the optical lenses 112, 112', 112", 112‴ to a destination by using here a conveyor belt 118. In this exemplary embodiment, the identifier may be placed on each tray 116, 116', wherein a position of each optical lens 112, 112', 112", 112‴ within the tray 116, 116' and an orientation of each surface of each optical lens 112, 112', 112", 112‴ within the tray 116, 116' is, further, known. Preferably, the identifier may comprise an RFID chip or tag (not depicted here) which is applied or attached to the respective tray 116, 116'. Alternatively or in addition, the identifier may be or comprise a barcode, in particular a standard barcode, especially selected from a linear code, a Data Matrix barcode, or a QR code. The identifier may, especially, correspond to an order number related to the optical lens 112, 112', 112", 112"', specifically supplemented by a reference indicating a particular surface of each optical lens 112, 112', 112", 112"'. As a further alternative (not depicted here), the providing and transporting of the optical lenses 112, 112', 112", 112‴ may be performed in a manual fashion as described above in more detail.

As further schematically illustrated in Figure 1, the exemplary embodiment of the device 110 further comprises a manufacturing executing system 120. Accordingly, the manufacturing executing system 120 has a routing logic engine 122, which is configured for routing the optical lenses 112, 112', 112", 112"', to a plurality of manufacturing machines 124, 124', 124". As indicated by arrows 126, 126', 126", the routing logic engine 122 as depicted here is configured for driving, controlling and monitoring the conveyor belt 118 in order to receive and transport the trays 116, 116' carrying the optical lenses 112, 112', 112", 112‴ to an appropriate station in, at or near to the manufacturing machines 124, 124', 124".

Accordingly the exemplary embodiment of the device 110 as shown in Figure 1, further, comprises the plurality of the manufacturing machines 124, 124', 124", each of which is designated for performing at least one manufacturing step in manufacturing the optical lenses 112, 112', 112", 112‴ according to the present invention. In particular, each manufacturing step may comprise at least one treatment in a process of producing a particular optical lens 112, 112', 112", 112‴ from a lens blank. For this purpose, a particular manufacturing machine 124, 124', 124" may be configured for performing the at least one manufacturing step, especially, selected from grinding, polishing, coating, engraving, taping, inspecting, or measuring one or both surfaces of the particular optical lens 112, 112', 112", 112"'. Alternatively or in addition, the at least one manufacturing step may be selected from washing, blocking, or deblocking the particular optical lens 112, 112', 112", 112‴. However, providing at least one further manufacturing machine that may be configured for performing at least one further manufacturing step may also be feasible.

The manufacturing executing system 120 as comprised by the exemplary embodiment of the device 110 has, according to Figure 1, a client 128, which is configured for generating data sets for the optical lenses 112, 112', 112", 112‴ according to the present invention. Accordingly, the data set for a particular optical lens 112, 112', 112", 112‴ may, preferably, comprise a first item of information related to the identifier for the at least one particular optical lens 112, 112', 112", 112‴. Herein, the first item of information corresponds to the identifier as described above, by which each optical lens 112, 112', 112", 112‴ is furnished in order to make it distinguishable from any further optical lens 112, 112', 112", 112‴ that may be comprised by the same plurality of the optical lenses 112, 112', 112", 112‴. In this respect, each manufacturing machine 124, 124', 124" is configured for selecting the at least one particular optical lens 112, 112', 112", 112‴ from the plurality of the optical lenses 112, 112', 112", 112‴ by using the first item of information.

Further, the data set for a particular optical lens 112, 112', 112", 112‴ may comprise a second item of information. In this respect, each manufacturing machine 124, 124', 124" is configured for performing the at least one manufacturing step at the particular optical lens 112, 112', 112", 112‴ depending on the second item of information. For this purpose, the second item of information may be related to at least one manufacturing step to be performed at the at least one particular optical lens 112, 112', 112", 112‴ by using the at least one manufacturing machine 124, 124', 124". By way of example, the second item of information may comprise at last one of a value for or a duration of force to be exerted on a particular surface of the particular optical lens 112, 112', 112", 112"', wherein the force may be used for grinding the particular surface of the particular optical lens 112, 112', 112", 112"'. As a further example, the second item of information may comprise at last one of a substance to be applied or a duration of appliance to a particular surface of the particular optical lens 112, 112', 112", 112‴, wherein the substance may be used for coating the particular surface of the particular optical lens. However, using another manufacturing step may also be conceivable.

Alternatively or in addition, the second item of information may be related to the at least one manufacturing machine 124, 124', 124", which is configured for performing at least one manufacturing step at the at least one particular optical lens 112, 112', 112", 112‴. By way of example, the particular manufacturing machine may be configured for turning a particular optical lens 112, 112', 112", 112‴ always according to a predefined value, such as about 180°, along a particular axis. As an alternative, the particular manufacturing machine 124, 124', 124" may be configured for performing a task in a manner that at least one sensor element (not depicted here) may be configured for reporting to the particular manufacturing machine 124, 124', 124". By way of example, the particular manufacturing machine may be configured for applying a coating having a predefined property to the particular optical lens 112, 112', 112", 112"', wherein a correct application of the coating may be monitored by the at least one sensor element, which may be configured for monitoring the predefined property. However, using further alternatives may also be conceivable.

In addition, the data set for a particular optical lens 112, 112', 112", 112‴ may, still, comprise at least one further item of information, in particular, nominal data and/or effective data related to refractive values for the particular optical lens 112, 112', 112", 112‴, especially values for a sphere, a cylinder, and a cylinder axis, and optionally, for a prism, a prism base, and an addition of the particular optical lens 112, 112', 112", 112‴.

For a purpose of a data exchange between the manufacturing executing system 120, the manufacturing machines 124, 124', 124" and the conveyor belt 118 a communication protocol is used which is, preferably, based on OPC Unified Architecture (OPC UA). Consequently, each data set which is transmitted according to the present invention is provided according to OPC UA as individual variables, wherein a plurality of variables is transmitted as serialized individual variables. As indicated above, the content of each variable comprises at least one piece of information expressed as a value being of a data type that is, particularly, selected from a bit, an integer value, a float value, an alphanumeric value, or a text string, or of an object comprising at least two of the data types. This contrasts to the generating of data sets according to a prior art standard communication protocol, in particular to DCS over TCP/IP, wherein each data set is composed of compound text strings that are based on consecutive individual values converted into text and separated by a specific separator, such as a semicolon, a comma or a dot. As a particular advantage of the present invention, a generating of a compound text string is no longer required. For writing a particular item of information, the manufacturing executing system 120 is no longer required to transform the individual values into compound text strings by using the specific separator. Similarly, for reading the particular item of information, the manufacturing machine 124, 124', 124" has no longer to convert the compound text strings into the individual values by using the specific separator.

In particular, using variables allows separating name and content of the variable, whereby, during an execution of a related computer program, the name of the variable is fixed, while the value of the variable as comprised by the content of the variable can be maintained or altered during a course of the execution of the related computer program. In this manner, the second item of information can be modified during the course of the manufacturing process. By way of example, the variable can be altered following an external demand that may be provided, especially in order to correct an error related to the particular optical lens 112, 112', 112", 112"'. As a further example, the variable can be altered following a notification by at least one sensor element, especially in order to ensure a correct application of a substance, such as a coating, to the particular optical lens 112, 112', 112", 112'". However, further examples may also be conceivable.

As further schematically illustrated in Figure 1, the client 128 as comprised by the manufacturing executing system 120 may, further, be configured for transmitting the data set for each optical lens 112, 112', 112", 112‴ to at least one data providing element 130, 130', 130". As Figure 1 shows, each data providing element 130, 130', 130" may be comprised by a particular manufacturing machine 124, 124', 124", thus being assigned to the particular manufacturing machine 124, 124', 124". As an alternative (not depicted here), at least two individual manufacturing machines may share a common data providing element. As a further alternative (not depicted here), a particular manufacturing machine may have at least two individual data providing elements, especially being assigned to at least two individual portions of the particular manufacturing machine.

In the exemplary embodiment as depicted in Figure 1, each data providing element 130, 130', 130", advantageously, has a cache 132, 132', 132", which acts as a buffer that is configured for storing a predefined number of the data sets for the optical lenses 112, 112', 112", 112‴, wherein the stored the data sets can, subsequently, be retrieved from the cache 130, 130', 130" upon demand by the particular manufacturing machine 124, 124', 124" that is assigned to the cache 130, 130', 130" by using a particular request.

In this exemplary embodiment, the data set for each particular optical lens 112, 112', 112", 112‴ is transmitted, as indicated by arrows 134, 134', 134", to the appropriate data providing element 130, 130', 130" in a manner that a particular manufacturing machine 124, 124', 124" that is designated for performing the at least one corresponding manufacturing step has access to the data set for each particular optical lens 112, 112', 112", 112"'. Owing to the definite assignment between each particular manufacturing machine 124, 124', 124" and each particular data providing element 130, 130', 130" as schematically illustrated in Figure 1, each particular manufacturing machine 124, 124', 124" can retrieve the data set for each particular optical lens 112, 112', 112", 112‴ by placing a respective demand to the corresponding data providing element 130, 130', 130" being assigned to the particular manufacturing machine 124, 124', 124".

Further in this exemplary embodiment, the manufacturing executing system 120 may be configured for transmitting the data set for each particular optical lens 112, 112', 112", 112‴ to the particular data providing element 130, 130', 130" assigned to the particular manufacturing machine 124, 124', 124" in advance. In this fashion, the particular data providing element 130, 130', 130" can store a definite number of tasks that are expected to be performed in near future. Subsequently, the particular manufacturing machine 124, 124', 124" can retrieve the required data set just in time without being required to queue for placing a direct request at the manufacturing executing system 120. As a consequence thereof, the manufacturing process can, considerably, be accelerated by using a definite procedure for processing the manufacturing steps, particularly owing to the definite arrangement of the exemplary device 110 according to the present invention.

According to the present invention, the manufacturing executing system 120 is further configured for controlling a particular manufacturing machine 124, 124', 124" and/or a particular manufacturing step, which is executed by a corresponding manufacturing machine 124, 124', 124". Accordingly, the particular manufacturing machine 124, 124', 124" and/or the particular manufacturing step is monitored for evaluating a behavior thereof and drawing consequences therefrom. In particular, the monitoring may be arranged over a predefined time interval, such as 0.01 s, 0.1 s, or 0.5 s to 1 s, 10 s, or 100 s, especially depending on a time assigned for performing the particular manufacturing step; however, using a different length for the time interval may also be feasible. Alternatively or in addition, the monitoring may be arranged in an intermittent fashion, whereby the monitoring may be resumed after commencing the particular manufacturing step on a further optical lens until the particular manufacturing step may be completed and/or may depend on a class of the reporting.

However, using a different time interval may also feasible, such as a sampling inspection on a periodic or random basis.

For this purpose, at least one particular manufacturing machine 124, 124', 124" may comprise at least one sensor element (not depicted here). The sensor element may, particularly, be configured for generating a plurality of sensor signals related to at least one process parameter. Herein, each sensor signal may be or comprise a measured value, which may, preferably, be provided in form of an electrical value, such as a current value or a voltage value, or in form of an optical value. By way of example, the sensor element may be selected from a pressure sensor being configured for determining a force which is measured on a particular surface of the particular optical lens 112, 112', 112", 112". As a further example, the sensor element may be selected from a liquid level sensor being configured for determining a status of a level of a liquid being used for coating purposes in a manufacturing step. Further examples are conceivable.

As indicated in Figure 1 by arrows 136, 136', 136", at least one item of information which may be related to the particular manufacturing machine 124, 124', 124" and/or the particular manufacturing step, such as the force on the particular surface of the particular optical lens 112, 112', 112", 112"', or the level of the liquid used for coating purposes, is forwarded to the client 128 comprised by the manufacturing executing system 120. As depicted in Figure 1, the client 128 may, further, be configured for using a software 138 configured for determining a status value related to the behavior of the particular manufacturing machine 124, 124', 124" and/or the particular manufacturing step.

Further, the software 138 may be configured for comparing the status value with a recommended value, wherein the recommended value denotes a preferred or tolerable value or interval for a process parameter, such as a force or a range of forces being considered as preferred or tolerable when applied to a surface of an optical lens 112, 112', 112", 112‴, or a level or a range of levels of a liquid being considered as preferred or tolerable when used for coating purposes.

Further, the software 138 may be configured for assigning a difference between the status value and the recommended value into two, three, four or more classes according to the difference. Herein, a first class denoted by the designation "good" may be used for indicating a particular range of forces being considered as preferred when applied to the surface of the optical lens 112, 112', 112", 112‴, while a further class denoted by the designation "warning" may be used for indicating a further particular range of forces being considered as tolerable but not preferred when applied to the surface of the optical lens 112, 112', 112", 112"', while a still further class denoted by the designation "alarm" may refer to a still further particular range of forces that is considered neither as preferred nor as tolerable when applied to the surface of the optical lens 112, 112', 112", 112‴. As a result, thereof, the further processing of the status value or the difference between the status value and the recommended value is facilitated by referring to a particular class without requiring further specific information about the content of the class.

Further, the software 138 may be configured for reporting the status value, depending on the class, to at least one manufacturing machine 124, 124', 124" or to at least one further device, which may, particularly, be selected from the manufacturing executing system 120 or a device controlled by the at least one manufacturing machine 124, 124', 124" or the manufacturing executing system 120 for further processing. Herein, the status value can, preferably, be reported by using a machine alert, in particular by using Andon alarms 140, 140', 140", each comprising a stack light configured to indicate the colors red, orange, and green. As depicted in Figure 1, Andon alarm 140 shows a flashing orange light 142, indicating the designation "warning", while Andon alarms 140' shows a shining green light 144, indicating the designation "good", whereas Andon alarm 140" shows a flashing red light 146, indicating the designation "alarm". As further illustrated in Figure 1, the status value can, alternatively or in addition, be reported by using a monitor 148 which displays the status value in form of a dashboard, in particular in form of an Andon dashboard 150. As depicted there, the Andon dashboard 150 is a dashboard that is configured for displaying a graphical representation of the Andon alarms 140, 140', 140". For this purpose, using OPC UA for the data transmission is particularly advantageous, especially since it favorably contributes in presenting variables to be visible at a glance. In the exemplary embodiment of Figure 1, the monitor 148 is a stand-alone monitor being controlled by the manufacturing executing system 120. Alternatively or in addition, the monitor 148 may be comprised by a mobile communication device 152, in particular a smartphone, a tablet, a personal digital assistant, or a laptop, which may be carried by a user, who supervises the manufacturing the optical lenses 112, 112', 112", 112"'. As a further alternative or still in addition, the status value can be provided in an acoustic fashion, such as by employing a loudspeaker, especially to reach the user in an event in which the user may not observe the monitor 148 or may not carry a mobile communication device.

The evaluated behavior of the particular manufacturing machine 124, 124', 124" and/or the particular manufacturing step can, subsequently, be used for controlling the particular manufacturing machine 124, 124', 124" and/or a further manufacturing machine 124, 124', 124" and/or manufacturing step. For this purpose, the status value can be reported to the particular manufacturing machine 124, 124', 124", especially to modify a process parameter related to an upcoming order concerning a further optical lens 112, 112', 112", 112‴. Herein, the data set may comprise information to be used for a further manufacturing step in manufacturing the further optical lens 112, 112', 112", 112‴. In this manner, an upcoming order can be modified by using a previously measured process parameter and/or a quality inspection characteristic related to a past order, if triggered by a class into which the difference between the status value and the recommended value has been assigned to. In this manner, the quality of manufacturing the further optical lens 112, 112', 112", 112‴ to be processed according to the upcoming order can be improved.

Alternatively or in addition, the status value can be reported to a further manufacturing machine 124, 124', 124", which may, especially, be located downstream in a manufacturing process. By way of example, the manufacturing machine 124', 124" as depicted in Figure 1 are located downstream of the manufacturing machine 124. For this purpose, the further manufacturing machine 124', 124" may be informed about the status of the particular manufacturing machine 124, for which the status values has been determined, if triggered by the corresponding class into which the difference between the status value and the recommended value has been assigned. In this manner, the data set for executing the present order on the particular optical lens 112, 112', 112", 112‴ can be modified by using the status value, thereby improving the quality of manufacturing the particular optical lens 112, 112', 112", 112‴. Further, a combination of the mentioned kinds of reporting the status value, or other kinds of reporting the status value, depending on the class, may also be feasible.

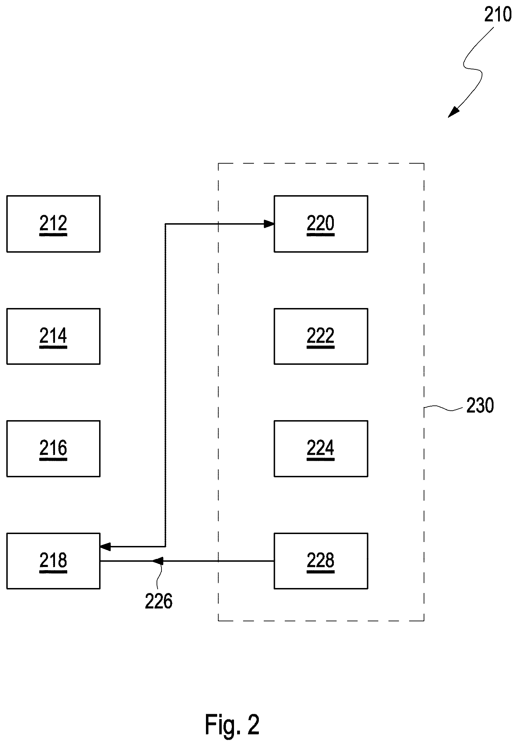

Figure 2 schematically illustrates an exemplary embodiment of a method 210 for manufacturing one or more optical lenses 112, 112', 112", 112" according to the present invention.

In a lens providing step 212 according to method step e), the optical lenses 112, 112', 112", 112" are provided. As already indicated above, each optical lens 112, 112', 112", 112", preferably, has an identifier. Further, each optical lens 112, 112', 112", 112" is subject to undergo at least one manufacturing step that is performed by the at least one manufacturing machine 124, 124', 124" configured for performing the at least one manufacturing step.

In a lens routing step 214 according to method step f), the optical lenses 112, 112', 112", 112" are routed to the at least one manufacturing machine 124, 124', 124", which is designated for performing the at least one manufacturing step.

In a lens selecting step 216 according to method step g), the at least one particular optical lens 112, 112', 112", 112" is selected, preferably from the plurality of the optical lenses 112, 112', 112", 112", especially by using the identifier.

In a lens manufacturing step 218 according to method step h), the at least one manufacturing step is performed at the at least one particular optical lens 112, 112', 112", 112", that has been provided to the particular manufacturing machine 124, 124', 124" in the lens selecting step 216 by using the at least one particular manufacturing machine 124, 124', 124".

In a determining step 220 according to method step a), the status value related to the manufacturing machine 124, 124', 124' and/or the manufacturing step is determined.

In a comparing step 222 according to method step b), the status value is compared with a recommended value, especially in a manner as described above in more detail.

In an assigning step 224 according to method step c), the difference between the status value and the recommended value is assigned to one out of two, three, or more classes according to the difference.

As indicated by the arrow 226, the status value is, depending on the class, reported in a reporting step 228 according to method step d), to the manufacturing machine 124, 124', 124' and/or to at least one further device, which may, particularly, be selected from the manufacturing executing system 120 or a device controlled by the manufacturing machine 124, 124', 124' or by the manufacturing executing system 120, such as the monitor 148 or the mobile communication device 152, especially to exert an influence on the manufacturing machine 124, 124', 124' and/or the manufacturing step, thereby modifying the lens manufacturing step 218.

As further described above in more detail, the determining step 220, the comparing step 222, the assigning step 224, and the reporting step 228 together constitute a method 230 for controlling the at least one manufacturing machine 124, 124', 124" or the at least one manufacturing step.

Summarizing and without excluding further possible embodiments, the following embodiments may be envisaged:
Embodiment 1: A method for controlling at least one manufacturing machine or at least one manufacturing step, wherein the at least one manufacturing machine is configured for performing the at least one manufacturing step in manufacturing at least one optical lens, the method comprising the following method steps:
   a) determining at least one status value related to at least one of the manufacturing machine or the manufacturing step;
   b) comparing the at least one status value with at least one recommended value;
   c) assigning a difference between the status value and the recommended value into at least two classes according to the difference; and,
   d) depending on the class, reporting the status value to at least one of the manufacturing machine or at least one further device.
Embodiment 2: A method for manufacturing at least one optical lens, the method comprising the following method steps:
   e) providing at least one optical lens, wherein the one optical lens optical lens is subject to undergo at least one manufacturing step being performed by at least one manufacturing machine configured for performing the at least one manufacturing step;
   f) routing the at least one optical lens to the at least one manufacturing machine designated for performing the at least one manufacturing step;
   g) selecting at least one particular optical lens;
   h) performing the at least one manufacturing step at the at least one particular optical lens by using the at least one manufacturing machine;
   a) determining at least one status value related to at least one of the manufacturing machine or the manufacturing step;
   b) comparing the at least one status value with at least one recommended value;
   c) assigning a difference between the status value and the recommended value into at least two classes according to the difference; and,
   d) depending on the class, reporting the status value to at least one of the manufacturing machine or at least one further device.
Embodiment 3: The method according to any one of the preceding embodiments, wherein reporting the at least one status value comprises displaying at least one characteristic signal at at least one of the manufacturing machine or the manufacturing executing system.
Embodiment 4: The method according to the preceding embodiment, wherein the at least one characteristic signal is provided as a machine alert, in particular as Andon alarm, or on a monitor, in particular as Andon dashboard.
Embodiment 5: The method according to any one of the preceding embodiments, wherein method step d) further comprises reporting the at least one status value to at least one further manufacturing machine.
Embodiment 6: The method according to any one of the preceding embodiments, wherein method step d) further comprises modifying at least one of the manufacturing machine or the manufacturing step.
Embodiment 7: The method according to any one of the preceding embodiments, wherein method step a) further comprises analyzing the manufacturing machine or the at least one manufacturing step with respect to at least one of a process parameter or a quality inspection characteristic for at least two optical lenses.
Embodiment 8: The method according to any one of the preceding embodiments, wherein at least one sensor element contributes in determining the at least one status value.
Embodiment 9: The method according to any one of the preceding embodiments, wherein a data set for each optical lens is transmitted to the at least one manufacturing machine designated for performing the at least one manufacturing step.
Embodiment 10: The method according to the preceding embodiment, wherein the data set comprising a plurality of variables is transmitted as serialized individual variables.
Embodiment 11: A device for controlling at least one manufacturing machine or at least one manufacturing step, wherein the at least one manufacturing machine is configured for performing the at least one manufacturing step in manufacturing at least one optical lens, the device comprising a manufacturing executing system, wherein the manufacturing executing system is configured for:
   a) determining at least one status value related to at least one of the manufacturing machine or the manufacturing step;
   b) comparing the at least one status value with at least one recommended value;
   c) assigning a difference between the status value and the recommended value into at least two classes according to the difference; and,
   d) depending on the class, reporting the status value to at least one of the manufacturing machine or at least one further device.
Embodiment 12: A device for manufacturing at least one optical lens, the device comprising:
   - at least one transport element, wherein the at least one transport element is configured for:
      e) providing at least one optical lens, wherein the at least one optical lens is subject to undergo at least one manufacturing step being performed by at least one manufacturing machine configured for performing the at least one manufacturing step; and
   - a manufacturing executing system, wherein the manufacturing executing system is configured for performing the following method steps:
      f) routing the at least one optical lens to the at least one manufacturing machine designated for performing the at least one manufacturing step;
      a) determining at least one status value related to at least one of the manufacturing machine or the manufacturing step;
      b) comparing the at least one status value with at least one recommended value; and
   - at least one manufacturing machine designated for performing the at least one manufacturing step in manufacturing the at least one optical lens, wherein the at least one manufacturing machine is configured for:
      g) selecting at least one particular optical lens;
      h) performing the at least one manufacturing step at the at least one particular optical lens by using the at least one manufacturing machine;
   wherein the manufacturing executing system is further configured for:
   c) assigning a difference between the status value and the recommended value into at least two classes according to the difference; and,
   d) depending on the class, reporting the status value to at least one of the manufacturing machine or at least one further device.
Embodiment 13: The device according to any one of the preceding device embodiments, wherein the manufacturing executing system is further configured for analyzing the particular manufacturing machine or the at least one manufacturing step with respect to at least one of a process parameter or a quality inspection characteristic for at least one optical lens.
Embodiment 14: The device according to any one of the preceding device embodiments, further comprising at least one of:
   - at least one transport element configured for routing the at least one optical lens according to method step f) to the at least one manufacturing machine designated for performing the at least one manufacturing step;
   - at least one sensor element configured for contributing in determining the at least one status value related; or
   - at least one data providing element configured for providing a data set for each optical lens designated for performing the at least one manufacturing step by the at least one manufacturing machine.
Embodiment 15: A computer program comprising executable instructions for performing at least one method step according to any one of embodiments 1 to 10 by using a device according to any one of embodiments 11 to 14.

### List of Reference Signs

- 110: device for manufacturing at least one optical lens
- 112, 112', 112", 112‴: optical lens
- 114, 114': transport element
- 116, 116': tray
- 118: conveyor belt
- 120: manufacturing executing system
- 122: routing logic engine
- 124, 124', 124": manufacturing machine
- 126, 126', 126": arrow
- 128: client
- 130, 130', 130": data providing element
- 132, 132', 132": cache
- 134, 134', 134": arrow
- 136, 136', 136": arrow
- 138: software
- 140: Andon alarm
- 142: flashing orange light
- 144: shining green light
- 146: flashing red light
- 148: monitor
- 150: Andon dashboard
- 152: mobile communication device
- 210: method for manufacturing at least one optical lens
- 212: lens providing step
- 214: lens routing step
- 216: lens selecting step
- 218: lens manufacturing step
- 220: determining step
- 222: comparing step
- 224: assigning step
- 226: arrow
- 228: reporting step
- 230: method for controlling at least one manufacturing machine or at least one manufacturing step

## Claims

1. A method (230) for controlling at least one manufacturing machine (124, 124', 124') or at least one manufacturing step, wherein the at least one manufacturing machine (124, 124', 124') is configured for performing the at least one manufacturing step in manufacturing at least one optical lens (112, 112', 112", 112‴), the method (230) comprising the following method steps:
a) determining at least one status value related to at least one of the manufacturing machine (124, 124', 124') or the manufacturing step;
b) comparing the at least one status value with at least one recommended value; **characterized by**
c) assigning a difference between the status value and the recommended value into at least two classes according to the difference; and,
d) depending on the class, reporting the status value to at least one of the manufacturing machine (124, 124', 124'),
**further comprising the steps of:**
reporting the status value to a further manufacturing machine (124', 124") located downstream of the at least one manufacturing machine (124), wherein the further manufacturing machine (124', 124") is informed about the status of the at least one manufacturing machine (124), for which the status value has been determined, if triggered by the corresponding class into which the difference between the status value and the recommended value has been assigned, and
modifying the data set for executing a present order on at least one particular optical lens (112, 112', 112", 112"') by using the status value, thereby improving the quality of manufacturing the at least one particular optical lens (112, 112', 112", 112‴).

2. A method (210) for manufacturing at least one optical lens (112, 112', 112", 112‴), the method comprising the following method steps:
e) providing at least one optical lens (112, 112', 112", 112‴), wherein the one optical lens optical lens (112, 112', 112", 112‴) is subject to undergo at least one manufacturing step being performed by at least one manufacturing machine (124, 124', 124') configured for performing the at least one manufacturing step;
f) routing the at least one optical lens (112, 112', 112", 112"') to the at least one manufacturing machine (124, 124', 124') designated for performing the at least one manufacturing step;
g) selecting at least one particular optical lens (112, 112', 112", 112‴);
h) performing the at least one manufacturing step at the at least one particular optical lens (112, 112', 112", 112"') by using the at least one manufacturing machine (124, 124', 124');
a) determining at least one status value related to at least one of the manufacturing machine (124, 124', 124') or the manufacturing step;
b) comparing the at least one status value with at least one recommended value; **characterized by**
c) assigning a difference between the status value and the recommended value into at least two classes according to the difference; and,
d) depending on the class, reporting the status value to at least one of the manufacturing machine (124, 124', 124') or at least one further device,
**further comprising the steps of:**
reporting the status value to a further manufacturing machine (124', 124") located downstream of the at least one manufacturing machine (124), wherein the further manufacturing machine (124', 124") is informed about the status of the at least one manufacturing machine (124), for which the status value has been determined, if triggered by the corresponding class into which the difference between the status value and the recommended value has been assigned,
modifying the data set for executing a present order on at least one particular optical lens (112, 112', 112", 112"') by using the status value, thereby improving the quality of manufacturing the at least one particular optical lens (112, 112', 112", 112‴).

3. The method (210, 230) according to any one of the two preceding claims, wherein the status value is reported to the particular manufacturing machine (124, 124', 124") to modify a process parameter related to an upcoming order concerning a further optical lens (112, 112', 112", 112"').

4. The method (210, 230) according to any one of the three preceding claims, wherein an upcoming order is modified by using a previously measured process parameter and/or a quality inspection characteristic related to a past order, if triggered by the class into which the difference between the status value and the recommended value has been assigned to.

5. The method (210, 230) according to any one of the four preceding claims, wherein the at least one status value is selected from at least one of:
- a processing time;
- a processing error;
- a macro parameter;
- a condition parameter at a time of processing;
- a tool being used or a lifetime of the tool at a time of processing;
- a time passed or a number of optical lenses processed since a preceding calibration;
- a size, a position accuracy, or a completeness of at least one mark on the optical lens;
- a measurement parameter; or
- a type, a size or a localization of at least one cosmetic defect of the optical lens.

6. The method (210, 230) according to any one of the five preceding claims, wherein reporting the at least one status value comprises displaying at least one characteristic signal at at least one of the manufacturing machine (124, 124', 124') or the manufacturing executing system (120).

7. The method (210, 230) according to any one of the six preceding claims, wherein method step d) further comprises reporting the at least one status value to at least one further manufacturing machine (124, 124', 124').

8. The method (210, 230) according to any one of the seven preceding claims, wherein method step d) further comprises modifying at least one of the manufacturing machine (124, 124', 124') or the manufacturing step.

9. The method (210, 230) according to any one of the eight preceding claims, wherein method step a) further comprises analyzing the manufacturing machine (124, 124', 124') or the at least one manufacturing step with respect to at least one of a process parameter or a quality inspection characteristic for at least two optical lenses (112, 112', 112", 112‴).

10. The method (210, 230) according to any one of the nine preceding claims, wherein a data set for each optical lens (112, 112', 112", 112‴) is transmitted to the at least one manufacturing machine (124, 124', 124') designated for performing the at least one manufacturing step.

11. The method (210, 230) according to the preceding claim, wherein the data set comprising a plurality of variables is transmitted as serialized individual variables.

12. A device for controlling at least one manufacturing machine (124, 124', 124') or at least one manufacturing step, wherein the at least one manufacturing machine (124, 124', 124') is configured for performing the at least one manufacturing step in manufacturing at least one optical lens (112, 112', 112", 112‴), the device comprising a manufacturing executing system (120), wherein the manufacturing executing system (120) is configured for:
a) determining at least one status value related to at least one of the manufacturing machine (124, 124', 124') or the manufacturing step;
b) comparing the at least one status value with at least one recommended value; **characterized by**
c) assigning a difference between the status value and the recommended value into at least two classes according to the difference; and,
d) depending on the class, reporting the status value to at least one of the manufacturing machine (124, 124', 124') or at least one further device,
**further comprising the steps of:**
reporting the status value to a further manufacturing machine (124', 124") located downstream of the at least one manufacturing machine (124), wherein the further manufacturing machine (124', 124") is informed about the status of the at least one manufacturing machine (124), for which the status value has been determined, if triggered by the corresponding class into which the difference between the status value and the recommended value has been assigned,
modifying the data set for executing a present order on at least one particular optical lens (112, 112', 112", 112"') by using the status value, thereby improving the quality of manufacturing the at least one particular optical lens (112, 112', 112", 112‴).

13. A device (110) for manufacturing at least one optical lens (112, 112', 112", 112‴), the device (110) comprising:
- at least one transport element (114, 114'), wherein the at least one transport element (114, 114') is configured for:
e) providing at least one optical lens (112, 112', 112", 112"'), wherein the at least one optical lens (112, 112', 112", 112‴) is subject to undergo at least one manufacturing step being performed by at least one manufacturing machine (124, 124', 124') configured for performing the at least one manufacturing step; and
- a manufacturing executing system (120), wherein the manufacturing executing system (120) is configured for performing the following method steps:
f) routing the at least one optical lens (112, 112', 112", 112"') to the at least one manufacturing machine (124, 124', 124') designated for performing the at least one manufacturing step;
a) determining at least one status value related to at least one of the manufacturing machine (124, 124', 124') or the manufacturing step;
b) comparing the at least one status value with at least one recommended value;
- at least one manufacturing machine (124, 124', 124') designated for performing the at least one manufacturing step in manufacturing the at least one optical lens (112, 112', 112", 112"'), wherein the at least one manufacturing machine (124, 124', 124') is configured for:
g) selecting at least one particular optical lens (112, 112', 112", 112‴);
h) performing the at least one manufacturing step at the at least one particular optical lens (112, 112', 112", 112‴) by using the at least one manufacturing machine (124, 124', 124');
**characterized by**
the manufacturing executing system (120) is configured for further performing the following method steps:
c) assigning a difference between the status value and the recommended value into at least two classes according to the difference; and,
d) depending on the class, reporting the status value to at least one of the manufacturing machine (124, 124', 124') or at least one further device, and
**further comprising the steps of:**
reporting the status value to a further manufacturing machine (124', 124") located downstream of the at least one manufacturing machine (124), wherein the further manufacturing machine (124', 124") is informed about the status of the at least one manufacturing machine (124), for which the status value has been determined, if triggered by the corresponding class into which the difference between the status value and the recommended value has been assigned,
modifying the data set for executing a present order on at least one particular optical lens (112, 112', 112", 112"') by using the status value, thereby improving the quality of manufacturing the at least one particular optical lens (112, 112', 112", 112‴).

14. The device according to any one of the two preceding device claims, wherein the manufacturing executing system (120) is further configured for analyzing the particular manufacturing machine (124, 124', 124') or the at least one manufacturing step with respect to at least one of a process parameter or a quality inspection characteristic for at least one optical lens (112, 112', 112", 112‴).

15. The device according to any one of the three preceding device claims, further comprising at least one of:
- at least one transport element configured for routing the at least one optical lens (112, 112', 112", 112‴) according to method step f) to the at least one manufacturing machine (124, 124', 124') designated for performing the at least one manufacturing step;
- at least one sensor element configured for contributing in determining the at least one status value related; or
- at least one data providing element (130, 130', 130") configured for providing a data set for each optical lens (112, 112', 112", 112‴) designated for performing the at least one manufacturing step by the at least one manufacturing machine (124, 124', 124').

16. A computer program comprising executable instructions for performing the method according to any one of claims 1 to 11 by using a device according to any one of claims 12 to 15.
